(19) **Europäisches Patentamt**
**European Patent Office**
**Office européen des brevets**

(11) **EP 1 654 935 B1**

(12) **EUROPEAN PATENT SPECIFICATION**

(45) Date of publication and mention
of the grant of the patent:
**25.02.2015 Bulletin 2015/09**

(51) Int Cl.:
*A23F 5/10* (2006.01)    *A23F 5/00* (2006.01)
*A23F 5/04* (2006.01)    *A23F 5/16* (2006.01)
*A23F 5/20* (2006.01)    *A23F 5/24* (2006.01)

(21) Application number: **04747966.2**

(22) Date of filing: **27.07.2004**

(86) International application number:
**PCT/JP2004/010653**

(87) International publication number:
**WO 2005/011396 (10.02.2005 Gazette 2005/06)**

(54) **METHOD OF TREATING ROASTED COFFEE BEANS AND VAPOR-TREATED ROASTED COFFEE BEANS**

VERFAHREN ZUR BEHANDLUNG VON GERÖSTETEN KAFFEEBOHNEN, SOWIE DAMPFBEHANDELTE GERÖSTETE KAFFEEBOHNEN

PROCEDE DE TRAITEMENT DE FEVES DE CAFE TORREFIEES ET FEVES DECAFE TORREFIEES TRAITEES A LA VAPEUR

(84) Designated Contracting States:
**AT BE BG CH CY CZ DE DK EE ES FI FR GB GR HU IE IT LI LU MC NL PL PT RO SE SI SK TR**

(30) Priority: **31.07.2003 JP 2003283818**

(43) Date of publication of application:
**10.05.2006 Bulletin 2006/19**

(73) Proprietor: **Suntory Beverage & Food Limited**
**Chuo-ku**
**Tokyo**
**1040031 (JP)**

(72) Inventors:
• **NAGAO, Koji**
**c/o Suntory Limited**
**Osaka 5308-203 (JP)**
• **YOKOO, Yoshiaki**
**Tokyo 1830014 (JP)**
• **TAKAHASHI, Kenzo**
**Kanagawa 2110033 (JP)**

(74) Representative: **Lemcke, Brommer & Partner**
**Patentanwälte Partnerschaft mbB**
**Bismarckstraße 16**
**76133 Karlsruhe (DE)**

(56) References cited:
**WO-A-95/20325        JP-A- 2 283 798**
**JP-A- 4 267 846        JP-A- 4 287 638**
**JP-A- 6 303 905        JP-A- 7 255 379**
**JP-A- 52 105 258       JP-A- 58 086 043**
**JP-A- 63 287 440       JP-A- 2000 175 624**
**JP-A- 2000 342 182     JP-A- 2001 046 005**
**JP-A- 2003 033 137     JP-A- 2004 049 086**
**US-A- 3 106 470        US-A- 3 620 758**
**US-A- 5 019 413**

• **PATENT ABSTRACTS OF JAPAN vol. 2000, no. 23, 10 February 2001 (2001-02-10) & JP 2001 149013 A (KIKKOMAN CORP; TAKASAGO COFFEE KK), 5 June 2001 (2001-06-05)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a method of treating roasted coffee beans and roasted coffee beans treated by the method. More particularly, the invention relates to a technique for reducing acidity component in roasted coffee beans and improving an extraction ratio of soluble solid component thereof.

### Background Art

The sterilization conditions relating to "coffee beverages" classified under "Fair Competition Regulations Relating to Markings of Coffee Beverages or the Like" and "Fair Competition Regulations Relating to Markings of Milk Beverages" are severe, so that heat sterilization for about 20 minutes at 120 deg. C is generally carried out. For this reason, the process involves a chemical change mainly of hydrolysis within the beverages, causing a problem of change in the tastes due to deterioration of the beverage, especially increased acidity. Also, in recent years, there has been an increasing disliking for acidity in coffee beverages among the public.

Therefore, reduction of acidity is an important object in the art of coffee beverages, and there have been disclosed inventions addressing to elimination of acidity component in coffee extract. But, there has been a need for development of a method which can reduce the acidity component more easily.

Improvement in the coffee extraction ratio has been another important object. In the coffee materials for use in coffee beverages, one of the principal material is roasted coffee beans. Depending on the degree of roasting, they are called, light roasted, medium roasted or dark roasted, in Japan.

Different kinds of roasting methods are e.g. known from WO-A-95 20325, US-A-5,019,413, US-A-3,106,470, JP-A-2001 149013 or JP-A-63 03905.

When regular coffee beans are extracted in a coffee beverage manufacturing factory, a dripping type extractor is generally employed to extract soluble solid component from ground roasted coffee beans with hot water (from 90 to 100°C).

Methods of manufacturing coffee extract are e.g. known from US-A-3,620,758, JP-A- 2004 049086 or JP-A-58 086043.

However, the manufacture of coffee beverages has suffered from the problem of low extraction ratio of soluble solid component of the roasted coffee beans.

Regarding the extraction ratio, it is generally said that "when coffee is extracted to its limit, an amount of component corresponding to 35% of its weight will be dissolved. However, as such dissolved component includes unpleasant odor component, the extraction is generally limited to about 18%." (see. e.g. "Glossary of Beverages, Beverage Japan, Inc. page 86).

Conventionally, for the purpose mainly of improvement of the extraction ratio and aroma improvement, a method of beans treatment with steam has been contemplated.

For instance, the gazette of Japanese Patent Application "Kokai" No. 2000-342182 discloses a method of modifying coffee beans by steaming roasted coffee beans with saturated steam and then vacuum-drying the beans, thereby reducing their unpleasant acidity, thus improving their quality. More particularly, this method intends to change the quality of coffee beans by steaming the beans for 5 to 30 minutes by supplying steam to a cooking pot employed in a sterilizing device for a short period of time.

Here, the language "steaming" refers to heating with using steam as heat medium. As such methods, there are the so-called steaming method in which steam is caused to directly contact the raw material, thus transferring heat thereto, the indirect heating method in which steam is supplied to the inside of a heating plate of e.g. a jacket, a pipe, etc, thus transferring heat through the heating plate, and a method combining the direct and indirect methods (see "Dictionary of Food Treating Systems and Instruments", Industrial Research Institute, Dictionary Publishing Center, 2002, page 100).

## Disclosure of the Invention

### Problem to be Solved by Invention

However, in the technique of steaming roasted coffee beans, while various researches have been made for elimination of odor ("robusta odor") of green beans and prevention of odor generation during roasting, it cannot be said that the technique has proven to be successful in the object of achieving both the improvement in the extraction ratio and the reduction of acidity at one time.

Hence, an object of the present invention is to provide a method of treating roasted coffee beans, capable of reducing acidity component of the roasted coffee beans and improving their extraction ratio at the same time, thereby to obtain good original aroma of coffee and to provide steam-treated roasted coffee beans treated by the method.

**Means to Achieve the Object**

According to the conventional wisdom, it has been generally believed that treatment of roasted beans with steam under a flowing condition thereof is inappropriate since this will result in loss of necessary soluble component or aroma component. Notwithstanding the above, the present inventors have found out through extensive research efforts to achieve the above-noted object that even roasted beans can be treated continuously with steam to have their acidity component eliminated and perfected the present invention.

Namely, the present inventors carried out a steam treatment on roasted coffee beans by continuously supplying steam thereto at a high temperature and high pressure and carried out a steam rinsing operation and a hydrothermal reaction on the roasted coffee beans at the same time. When exhausted steam was collected as condensed liquid ("drain"), it was found that the soluble solid component of the roasted coffee beans had hardly eluted into the drain. On the other hand, the analysis of various organic acids in the drain revealed that the treatment can extract formic acid and acetic acid specifically. Further, evaluation of the extraction ratio of the soluble solid component of the roasted coffee beans before and after the continuous steam treatment with steam revealed that the hydrothermal reaction can significantly improve the extraction ratio.

That is to say, one characterizing feature of the method of treating roasted coffee beans according to the present invention lies in that a steam treatment is effected on the roasted coffee beans by supplying steam thereto under a flowing condition thereof.

With the roasted coffee beans treated as above, the acidity component is eliminated according to the above-described finding and the hydrothermal reaction process brings about improvement in the extraction ratio of the soluble solid component.

Further, especially, when the species: robusta (COFFEA CANEPHORA) is employed as the roasted coffee beans, the unpleasant odor characteristic with the robusta species is collected in the condensed liquid of the exhausted steam, hence, quality improvement of the robusta species can be accomplished at the same time.

The other characterizing feature of the method of treating roasted coffee beans according to the present invention lies in that the roasted coffee beans are accommodated in a bean accommodating portion having a steam supply passage and a steam exhaust passage and the steam treatment is effected by flowing the steam having a temperature of from 100 to 230 °C from the steam supply passage to the steam exhaust passage such that the steam is exhausted from the steam exhaust passage at an outlet pressure higher than the atmospheric pressure.

Namely, by effecting the steam treatment in the manner described above, while the bean accommodating portion is maintained under the pressurized condition, steam is caused to flow through this bean accommodating portion, thereby realizing contact between the roasted coffee beans and the steam. As the contact between the roasted coffee beans and the steam takes place under the pressurized condition, the hydrothermal reaction takes place more actively, so that the extraction ratio of the soluble solid component can be improved and the acidity elimination takes place in an efficient manner. Therefore, the steam treatment can be completed within a shorter period of time, hence, the loss of the aroma component or the like of the roasted coffee beans can be restricted.

The characterizing feature of a preferred embodiment of the method of treating roasted coffee beans according to the present invention lies in that the roasted coffee beans comprise whole roasted beans and ground roasted beans which can pass a mesh of an aperture of 1.7 mm and the amount of the ground roasted beans is 70 weight % or less.

That is to say, the method can be applied not only to whole roasted beans, but also to roughly ground roasted coffee beans. And, as long as such conditions are met, as will become apparent from Examples to be described later, even when roughly ground roasted coffee beans are included, in addition to the desired acidity eliminating effect, the disadvantageous decrease in the roast aroma can be restricted.

Further, the characterizing feature of another preferred embodiment of the method of treating roasted coffee beans according to the present invention lies in that the roasted coffee beans comprise whole roasted beans.

The acidity component of the roasted coffee beans is present in abundance in the vicinity of the surfaces of the beans which received the roasting effect more strongly. Therefore, by employing roasted beans of a lower degree of grinding, the acidity component can be eliminated sufficiently and at the same time the loss of the aroma component can be restricted. Moreover, by the present inventors, it has been confirmed that sufficient elimination of the acidity component is possible even with whole roasted beans. Therefore, by employing whole roasted beans as the roasted coffee beans, it is possible to restrict the loss of aroma component while effectively eliminating the acidity component thereof. Moreover, it is also possible to maintain the extraction ratio of the roasted coffee beans high.

Further, the characterizing feature of another preferred embodiment of the method of treating roasted coffee beans according to the present invention lies in that the amount of steam used in the steam treatment is 10 weight % or more of the weight of the roasted coffee beans.

Namely, by setting the amount of steam used in the steam treatment at 10 weight % or more of the weight of the roasted coffee beans, as will become apparent from Examples to be described later, the effect of eliminating the acidity component, in particular, formic acid and acetic acid, can be expected.

Further, the characterizing feature of still another embodiment of the method of treating roasted coffee beans according to the present invention lies in that the steam comprises saturated steam.

The acidity component contained in the roasted beans can be eliminated efficiently by using steam of a high saturation ratio. Therefore, by using saturated steam in particular, higher acidity eliminating effect can be achieved.

Further, the characterizing feature of the method of treating roasted coffee beans according to a specific embodiment of the present invention lies in that the steam has a temperature of from 165 to 230°C.

The hydrothermal reaction takes place actively under a high temperature and a high pressure. Hence, by maintaining the steam at a high temperature, a high acidity component eliminating efficiency can be achieved. For this reason, by treating the roasted coffee beans with steam having a temperature of from 165 to 230°C, it is possible to restrict the loss of aroma component while effectively eliminating the acidity component thereof. Moreover, it is also possible to maintain the extraction ratio of the roasted coffee beans high.

The resulting roasted coffee beans preferably have an extraction ratio of 35% or more and a sum of an amount of formic acid and an amount of acetic acid relative to the roasted coffee beans is 0.25 weight % or less.

Namely, by effecting the steam treatment with steam supplied under a flowing condition thereof, it has become possible to provide roasted coffee beans with less acidity and sufficient aroma although the extraction ratio significantly exceeds the conventionally believed limit of about 18%.

The roasted coffee beans are preferably accommodated in a bean accommodating portion having a steam supply passage and a steam exhaust passage and the steam treatment is effected by flowing saturated steam of from 165 to 230 deg. C from the steam supply passage to the steam exhaust passage such that the steam is exhausted from the steam exhaust passage at an outlet pressure higher than the atmospheric pressure.

Namely, as the steam treated roasted coffee beans have received the steam treatment at the high temperature and high pressure, the acidity component has been eliminated sufficiently therefrom and the extraction ratio is maintained high. Hence, it has become possible to provide roasted coffee beans with less acidity and sufficient body and aroma.

Incidentally, the language "roasting" as employed in the present invention means "roasting" as generally employed for coffee, namely, the language refers to roasting green coffee beans by applying a heat source thereto. Generally, it is said that change resulting from roasting involves receipt of heat by cell walls of the green beans, which causes progressive evaporation of aqueous component therefrom and subsequent contraction of the tissue. The green beans become dark brown only after being roasted, thus obtaining characteristic aroma, bitterness and acidity to become coffee beans for use in beverages.

Therefore, the language "roasted coffee beans" as employed in the present invention refers to beans made from green coffee beans which have received the above-described roasting step. The species and the degree of roasting of the roasted coffee beans employed in the present invention and the roaster, the roasting method employed in the same are not particularly limited, but can be conventionally employed ones.

In the present invention, the species of coffee beans can be COFFEA ARABICA, COFFEA CANEPHORA (robusta), COFFEA LIBERICA, etc. Especially, COFFEA ARABICA, COFFEA CANEPHORA can be used advantageously. The method of the invention can be used especially advantageously for species having strong acidity. And, as the method can eliminate unpleasant smell or odor together with the acidity, the invention can be used advantageously also for the species having unpleasant odor such as COFFEA CANEPHORA.

The roaster to be used for the green coffee beans can be a standard roaster (horizontal (lateral) drum roaster). Also, the roasting method, in terms of the heating method used therein, can be direct fired heating, hot air heating, far-infrared heating, microwave heating, etc. Also, the roasting degree can be any one of light roasted, cinnamon roasted, medium roasted, high roasted, City roasted, Full City roasted, French roasted, or Italian roasted, according to the U.S. style eight-stages naming.

**Best Mode of Embodying the Invention**

Next, the present invention will be described in details.

According to the present invention, the reduction of acidity of roasted coffee beans can be realized by the steam treatment. Hence, the invention can be effectively employed for roasted beans which require acidity reduction. Non-limiting examples of such roasted beans requiring acidity reduction are beans of high roasting degree, roasted beans whose extraction ratio has been increased through a high-pressure treatment. With many of such roasted beans having an enhanced extraction ratio, improvement in the acidity thereof has been a major problem. Hence, the present invention can be effectively employed, for instance, for roasted beans having an extraction ratio of 20% or more. Therefore, the technique of the present invention can be employed in combination with a variety of techniques adapted for improvement in the extraction ratio of coffee beans.

As to the grain size of the roasted coffee beans, whole beans or grains with low grinding degrees are preferred in order to restrict "washing away" of soluble solid coffee components by the continuous steam treatment. In particular, as much of the acidity component of the roasted beans is present in the vicinity of the surfaces of the beans which have received the roasting effect strongly, there can be employed advantageously roasted beans which are substantially whole beans (non-ground) whose shape is most resistant against washing-away of soluble solid coffee components by the continuous steam treatment. However, ground beans (extremely roughly ground beans) can be employed also within a permissible range of the washing-away of soluble solid coffee components by the continuous steam treatment.

According to the present invention, the steam treatment with continuously flowing steam is effected as this can eliminate the acidity component efficiently. In the present invention, when the steam treatment is effected by such flowing steam, the apparatus and the method used therefor are not particularly limited as long as such apparatus or method allows substantially continuous flow of the steam. Alternatively, the steam can be caused to flow intermittently or stepwise. The sole requirement is that the steam can pass through the roasted coffee beans under the condition of an exhaust valve being constantly opened or semi-continuously opened.

The type of the apparatus employed for effecting the steam treatment is not particularly limited. The apparatus can be any apparatus which allows control of the continuous steam treatment. A horizontal type, vertical type apparatus or a butch or continuous type apparatus can be employed. In case a pressure vessel is used, in general, when the pressure (or temperature) has reached a predetermined value in the course of the steam treatment of a treatment target object, the exhaust valve will be closed and the pressure or temperature will be maintained for a predetermined period. In the case of the present invention, however, the treatment is effected with the exhaust valve being opened continuously or semi-continuously as described above. The treatment rate of the steam per unit time is not particularly limited as long as such rate permits elimination of acids. However, the rate from 0.1 to 100 kg/h (hour) per 1 kg of roasted coffee beans is preferred, for instance.

The apparatus for generating steam is not particularly limited, but can be a steam boiler, a Japanese cooking pot, etc. As to the water quality of the steam, "pure steam", i.e. steam generated from pure water, is preferred. However, the water quality is not particularly limited as long as it is usable for food treatment. In some cases, steam can be generated from water added with e.g. an appropriate amount of alcohol. Further, for the purpose of energy saving, a portion of the steam can be used in circulation as long as the resultant quality of the treated roasted beans product is permissible.

The type of steam is not particularly limited, but can be saturated steam, super-heated steam, super-saturated steam, etc. Incidentally, if the effect of improving the extraction ratio of roasted beans is desired also, the temperature condition of the steam can be about 100°C or higher. In such case, however, generation of acids will progress over time. And, in the case of such condition where the acid generation occurs in parallel within the roasted beans, steam having a high saturation degree, in particular, saturated steam, having high acid removing effect can be employed advantageously.

On the other hand, in the case of the treatment condition involving a lower degree of acid generation or no acid generation at all (e.g. the condition of 100°C or lower or a low-pressure condition), the type of steam is not particularly limited, and saturated steam, super-heated steam, super-saturated steam etc. can be employed.

As to the temperature and pressure conditions of the steam, in principle, the requirement for eliminating the acidity and the unpleasant odor is the presence of flow of the steam. Further, if it is desired to achieve also improvement in the extraction ratio of the roasted beans, it is necessary to obtain the soluble component through hydrolysis of polysaccharides or fibers which are the insoluble components in the coffee beans. Therefore, it is desired that the temperature and pressure conditions of the steam comprise certain higher temperature and pressure conditions.

That is, as to the pressure, the pressurizing condition, in particular, from 0.1 to 3.0 MPa is preferred.

The temperature condition required for realizing the above pressure condition will vary in range, depending on the type of steam employed. In general, steam at 100 to 300°C can be used. However, in the case of the saturated steam, the above-described pressure can be realized with setting the temperature in the range from about 100°C to 230°C. Even preferably, the pressure (about 0.7 to 3.0 MPa) which is a condition for enhancing the extraction ratio of the soluble solid coffee component through the hydrothermal reaction is desirable. For realizing this pressure condition, in the case of saturated steam, this pressure condition can be set within the temperature range from about 165°C to 230°C.

In order to flow the steam under such conditions as above, the roasted coffee beans are accommodated in a bean accommodating portion having a steam supply passage and a steam exhaust passage and the steam treatment is effected by flowing the steam from the steam supply passage to the steam exhaust passage such that the steam is exhausted from the steam exhaust passage at an outlet pressure higher than the atmospheric pressure.

In order to treat the roasted coffee beans by the method of the present invention in a stable manner, thereby obtaining high quality roasted coffee beans, the treatment rate of the steam to be flown and the environmental temperature/pressure during the treatment are controlled.

The major controlling method can be controlling of the environmental temperature/pressure through utilization of correlation between the temperature and the pressure of steam to be flown. Specifically, for a chosen shape and/or material property of a treatment tank, pipe diameters, pipe materials, the number of pipes suitable for flowing the steam may be selected and designed. Further, by employing a treatment tank equipped with a device which allows free control of the piping by means of a control valve or the like, the inside of the flow treatment tank can be maintained under a desired constant pressure environment and at the same time a required amount of steam can be flown therethrough.

The flow direction of steam in the course of the continuous steam treatment of the roasted coffee beans is not particularly limited. Some non-limiting examples of the directions are directions from up to down, from down to up, from outside to inside, from inside to outside, relative to the roasted coffee beans to be treated.

As to the exhausted steam, in view of the operating condition, it is preferred that the steam be condensed by using e.g. a condenser and be collected as aqueous solution, rather than being exhausted directly. In some cases, the flown steam may be recycled to be used again for treating roasted coffee beans. Within the condensed liquid, the acidity component and the unpleasant odor component of the robusta coffee roasted beans are collected.

The roasted coffee beans of the invention steam-treated in the manners described above and having their acidity component removed therefrom may be subjected to cooling, drying (vacuum drying, hot-air drying) and then stored in a silo or the like by the standard method.

The steam-treated roasted coffee beans of the present invention can be used, as a coffee material for a coffee beverage, in combination with roasted coffee beans ("regular coffee beans"), instant coffee, liquid coffee essence, etc. and can be manufactured as such in a coffee beverage manufacturing factory by a standard method. Taking a manufacturing process of a coffee beverage canned product for example, the product can be manufactured by the steps of "grinding" (grinding of regular coffee beans and roasted coffee beans), "extracting", "blending", "filtering", "filling", "seaming", "sterilizing", "cooling" and "packaging".

Or, instant coffee, liquid coffee essence or the like can be prepared with using the roasted coffee beans.

Next, the present invention will be described specifically by way of Examples.

Example 1

Regarding the method for reducing acidity component in whole roasted coffee beans, studies were made on the influence of the temperature condition when the whole roasted coffee beans are soaked in water.

Namely, under the atmospheric pressure, to each of 300 ml water portions kept at temperatures of 75, 85, 95 and 100 deg. C respectively, 20g of roasted coffee beans (L=19 (the standard index indicative of chromaticity/brightness of solid and liquid, referred to as "L value") species: COFFEA ARABICA) was added and stirred together for 5 minutes. Then, the mixture was received by a stainless mesh (140 mesh) for solid-liquid separation, whereby soaking solution (about 300 ml) for each temperature was obtained. For the soaking solution obtained, soluble solid coffee component (Brix) and acidity component (acidity) were determined.

In the Brix determination, RX-5000 from ATAGO Co., Ltd. was employed and the determination was made by dripping about 0.5 ml of the soaking solution onto a metering dish.

For the acidity, titratable acidity was determined and the soaking solution was titrated to pH7 with 0.1 N NaOH and the acidity was represented as an amount (ml) of 0.1 N NaOH required for the titration.

The results are shown in Table 1. The acidity per Brix were low from 6.1 to 9.2 for the soaking solutions at the temperature levels of 95°C or lower. Whereas, in the case of the soaking solution of 100°C, the acidity per Brix showed a higher value of 57.4 than the other levels.

Therefore, in the case of the whole roasted coffee beans, the acidity component and the soluble solid coffee component cannot be separated selectively even with the addition/stirring to and with the hot water at temperatures of 95°C or lower. Surprisingly, however, it was found that in the case of the hot water at 100°C, the acidity component can be selectively removed relative to the soluble solid coffee component.

[Table 1]

| temperature (°C) | 75 | 85 | 95 | 100 |
|---|---|---|---|---|
| acid (ml) | 1.20 | 1.10 | 1.15 | 39.00 |
| Brix (%) | 0.13 | 0.16 | 0.19 | 0.68 |
| acid/Brix (ml/%) | 9.2 | 6.9 | 6.1 | 57.4 |

Example 2

In order to investigate whether the above-described phenomenon which occurred in the case of 100°C was attributable mainly to the steam or to the water, studies were made in the vicinity of 100°C with using a compact autoclave (heat-resistant, pressure-resistant sealed container).

More particularly, a treatment of steaming roasted coffee beans with steam (gas-phase treatment) and a treatment of soaking roasted coffee beans in water (liquid-phase treatment) were effected respectively and the results were studied in comparison with each other.

Referring to the gas-phase treatment more particularly, a stainless mesh (140 mesh, having a same diameter as the beaker) containing therein 30g of roasted coffee beans (L=20, species: COFFEA ARABICA) was placed on a beaker containing 300 ml of water so as not to contact the water. Then, after the roasted coffee beans were steamed with water steam by an autoclave operation at 105°C for five minutes, the acidity component (in this case, pH was determined) and soluble solid coffee component (Brix) of the water in the beaker were evaluated.

On the other hand, referring to the liquid-phase treatment more particularly, 30g of roasted coffee beans (L=20) was introduced into a beaker containing 300 ml of water to be soaked therein and under this soaking condition, a soaking treatment (liquid-phase treatment) was effected by an autoclave operation at 105°C for five minutes. After the roasted coffee beans were removed, the water in the beaker was evaluated similarly.

The results are shown in Table 2. As may be apparent from this table, in comparison with the liquid-phase treatment, the water in the beaker in the case of the gas-phase treatment selectively contained the acidity component, without containing the soluble solid coffee component (Brix). That is, it is believed that the volatile acidity component was removed from the beans by the steam and collected in the beaker. Therefore, it was found that for selective removal of acidity component, it is important to cause roasted coffee beans to directly contact steam.

[Table 2]

|       | gas-phase treatment | liquid-phase treatment |
|-------|---------------------|------------------------|
| pH    | 4.60                | 4.77                   |
| Brix  | 0.00                | 1.41                   |

### Example 3

The effect of the steam treatment on the acidity component of roasted coffee beans was studied.

As roasted coffee beans, roasted coffee beans (L=18, species: COFFEA ARABICA) having a high roasting degree were employed. 2.0 kg of the roasted coffee beans were put into a pressure vessel ("bean accommodating portion") having pressure resistance of 3.0 MPa and including a steam inlet pipe and an outlet pipe. Then, a steam treatment was effected by flowing saturated steam of a low pressure: 0.2 MPa (120°C) from the steam inlet pipe at a rate of 210kg/h per 1kg of roasted coffee beans. Then, after effecting this steam treatment at the pressure of 0.2 MPa (120°C) for four minutes, the beans were dried in vacuum, whereby steam-treated roasted coffee beans ("invention's treated beans" hereinafter) were obtained.

Further, the invention's treated beans and un-treated beans were extracted and extraction ratios and pH values thereof were determined. More particularly, the extraction was effected for five minutes by adding 500 ml of 95°C hot water to 50g of ground beans of each beans. And, the pH value, the soluble solid component (Brix) and the extraction ratio were evaluated.

Incidentally, the extraction ratio* was calculated by the following formula from the Brix (B), collected liquid amount (A) and ground bean weight (C) of the extract.

$$* (\%) = A(g) \times B(\%) / C(g)$$

The results are shown in Table 3. As may be apparent from this table, the invention's treated beans had a slightly higher extraction ratio than the un-treated beans. It was found, however, that in comparison with the un-treated beans, the invention's treated beans had their acidity restricted as being indicated by a higher acidity (pH) of its extract.

[Table 3]

|                            | invention's treated beans | un-treated beans |
|----------------------------|---------------------------|------------------|
| extraction ratio (%)       | 24.5                      | 22.4             |
| extraction ratio proportion| 1.09                      | 1.00             |
| pH                         | 5.58                      | 5.32             |

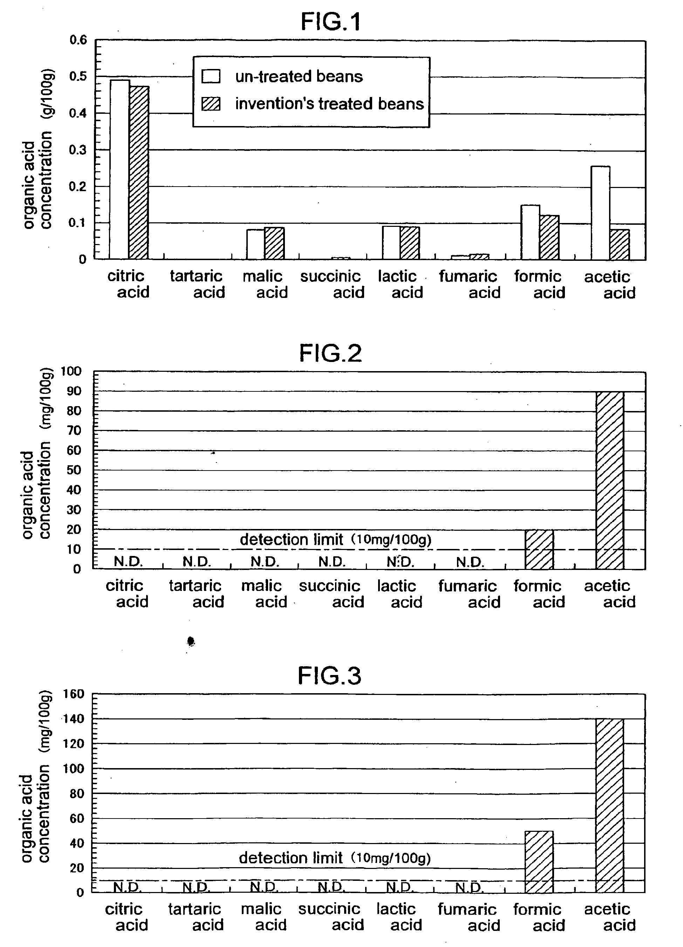

Then, the acidity components (organic acids) of the invention's treated beans and un-treated beans were analyzed (Fig. 1). For this analysis, each beans were ground and after extractions using 0.5 % perchloric acids (for citric acid, malic acid, succinic acid, lactic acid, formic acid, acetic acid) or water (for tartaric acid, fumaric acid), the beans were filtrated to obtain test solutions. Thereafter, analyses were effected with using high performance liquid chromatography method. And, the components were represented as the amounts of organic acids per unit weight of coffee beans. In Fig. 1, absence of values indicate values below the detection limit.

As the result, as may be apparent from Fig. 1, it may be seen that the invention's treated beans, as compared with the un-treated beans, the formic acid and acetic acid were reduced as compared with the beans prior to the treatment. Incidentally, substantially no changes were observed in the contents of the non-volatile organic acids (citric acid, tartaric acid, malic acid, succinic acid, lactic acid, fumaric acid).

Next, evaluation was made on the steam exhausted during the steam treatment of the invention's treated beans. More particularly, steam exhausted in the steam treatment was condensed by a condenser and collected (referred to as "drain" hereinafter). About 2L of drain was obtained, per 1 kg of roasted coffee beans. Then, the soluble solid component (Brix) and the acidity components (organic acids) were analyzed.

Brix of the drain was 0.11 ($\fallingdotseq$ solid component: 1.1g/L). When converted into a value per unit weight of roasted coffee beans, the above value means that only about 0.2 % (about 2.2g/kg) of soluble solid component had eluted into the drain. Hence, it was found that even after the steam treatment, the loss amount of the soluble component was sufficiently small.

Further, the acidity components (organic acids) of the drain were analyzed (Fig. 2). For the analysis, the drain was filtrated to obtain test solution and the analysis thereof was effected with using high performance liquid chromatography method and the values were represented as the amounts of organic acids per unit weight of drain. As the result, the formic acid and acetic acid were selectively detected as the acidity components.

Based on the above-described results, it was found that when steam is caused to flow through roasted beans, the acidity components included in the roasted beans, in particular, formic acid and acetic acid, can be selectively eliminated without impairing the soluble component in the roasted beans.

**Example 4**

The method of flowing steam was studied as a method of enhancing the removing efficiency of acidity components. Further, it was speculated that if a hydrothermal reaction at a high temperature is carried out simultaneously therewith within the pressure vessel, this might improve the extraction ratio of the soluble solid component of the roasted coffee beans.

Then, the steam treatment and the hydrothermal reaction of the roasted coffee beans were effected simultaneously by flowing steam through the whole roasted coffee beans at a high temperature and a high pressure.

More particularly, 2.0 kg of roasted coffee beans (L=20, species: COFFEA ARABICA) were put into a pressure vessel having pressure resistance of 3.0 MPa and including a steam inlet pipe and an outlet pipe. Then, a steam treatment was effected by flowing steam (saturated steam) of a high pressure: 1.3 MPa (194°C) from the steam inlet pipe at a rate of 100kg/h per 1kg of roasted coffee beans. Then, after effecting the steam treatment at the pressure of 1.3 MPa (194°C) for four minutes, the invention's treated beans 1, as roasted coffee beans, were obtained.

Further, control beans without the steam flowing treatment were obtained. Namely, in this case, after steam was supplied from the steam inlet pipe into the pressure vessel, when the pressure inside the vessel reached 1.3 MPa (194°C), the valve of the outlet pipe was closed. Except this, the control beans were treated under the same conditions as the invention's treated beans 1.

Also, the roasted coffee beans prior to the steam passing treatment were used as "un-treated beans".

Further, for valuation of the property of the steam employed in the steam flowing treatment, a steam flowing treatment was effected by flowing super-heated steam of 0.2 MPa (194°C) at a rate of 100kg/ h per 1kg of the roasted coffee beans. This was conducted at the pressure of 0.2 MPa (194°C) for four minutes, whereby the invention's treated beans 2, as roasted coffee beans, were obtained.

Next, the loss of soluble components in the invention's treated beans 1 and the invention's treated beans 2 were investigated. As the result, about 2L of drain of the exhausted steam was obtained, per 1 kg of each roasted coffee beans. The analyses of the drains revealed that Brix of these drains were 0.51 ($\fallingdotseq$ solid component: 5.1g/L) and 0.35 ($\fallingdotseq$ solid component: 3.5 g/L), respectively. When converted into values per unit weight of roasted coffee beans, the values mean that only about 1 % (about 10 g/kg) of soluble solid component had eluted into each drain. Hence, it was found that even after the continuous steam treatment, the loss amount of the soluble component was sufficiently small in the non-ground roasted beans.

Also, on the invention's treated beans 1, steam exhausted in the steam treatment was condensed by a condenser and collected (referred to as "drain" hereinafter). And, the soluble solid component (Brix) and the acidity components (organic acids) in the drain were analyzed. The analysis of the organic acids in the drain was conducted in the same manner as Example 3. And, the values were represented as the amounts of organic acids per unit weight of the drain. The results are shown in Fig. 3. As may be apparent from the figure, as the acidity components, formic acid and acetic acid, were selectively removed.

Further, the invention's treated beans 1, the invention's treated beans 2, the control beans and the un-treated beans were dried and ground and their extracts were evaluated. More particularly, an extraction was effected for five minutes by adding 500 ml of 95°C hot water to 50g of ground beans of each beans. And, the extraction ratio and the contents of formic acid and acetic acid of the extract were analyzed.

The results are shown in Table 4.

[Table 4]

|  | invention's treated beans 1 | invention's treated beans 2 | control beans | un-treated beans |
|---|---|---|---|---|
| extraction ratio (%) | 40.4 | 35.6 | 40.7 | 23.1 |
| sum of contents of formic acid and acetic acid in extract (ppm) | 160 | 174 | 281 | 230 |
| sum of ratios of formic acid and acetic acid per unit weight of beans (weight %) | 0.224 | 0.244 | 0.393 | 0.322 |

As may be apparent from Table 4, the extract of the invention's treated beans 1, as compared with the extracts of the control beans and the un-treated beans, had lower contents of formic acid and acetic acid, hence, the extract of the invention's treated beans 1 had reduced acidity, in comparison with the extracts of the control beans and the un treated beans. This is believed to be attributable to removal of the acidity components from the drain for the invention's treated beans 1. Further, the extract of the invention's treated beans 2 too had lower contents of formic acid and acetic acid, as compared with the extracts of the control beans and the un-treated beans. Hence, it was found that regarding the steam employed in the passing treatment, the acidity component eliminating effect can be found not only with saturated steam, but also with super-heated steam.

That is to say, it was found that with the invention's method, it is possible to obtain roasted coffee beans having their acidity components eliminated without loss of soluble component and having their extraction ratio of the soluble solid coffee component improved through the hydrothermal reaction treatment.

## Example 5

Next, the amount of steam required for the removal of the acidity components was studied. It is believed that the greater the amount of steam used in the invention's method, the higher the acidity component eliminating effect. Then, 2.0 kg of roasted coffee beans were introduced into a pressure vessel having a pressure resistance of 3.0 MPa and including a steam inlet pipe and a steam outlet pipe. Then, high-pressure steam (saturated steam) of 1.0 MPa (180°C) was introduced from the steam inlet pipe, with adjusting the flowing rates thereof such that the total used steam amounts may be 10 kg, 2 kg, 0.5 kg, 0.2 kg and 0.1 kg, respectively. The steam flowing treatment was effected at 1.0 MPa (180°C) for four minutes, whereby the invention's treated beans, as roasted coffee beans, were obtained. Incidentally, control beans were obtained by effecting the same treatment as that for the invention's treated beans, except that no steam passing treatment was effected. Namely, in this case, after steam was supplied from the steam inlet pipe into the pressure vessel, when the pressure inside the vessel reached 1.0 MPa (180°C), the valve of the outlet pipe was closed.

The invention's treated beans and the control beans obtained as above were dried and ground, and to 50 g of each ground beans, 500 ml of 95°C hot water was added to effect extraction for five minutes. Then, on the extracts obtained, determinations of contents of formic acid and acetic acid and evaluation of acidity by special panelists were conducted. Incidentally, the evaluation of acidity was conducted by the scoring method and evaluated in three levels of:

acidity "felt" = 3 points,
"slightly felt" = 2 points
"not felt" = 1 point

and, an average point of the five special panelists was calculated.

The results are shown in Table 5.

[Table 5]

| | invention's treated beans | | | | | control beans |
|---|---|---|---|---|---|---|
| total amount of steam flown through (kg) | 10 | 2 | 0.5 | 0.2 | 0.1 | - |
| amount of steam flown through per unit weight of roasted beans (weight %) | 500.0 | 100.0 | 25.0 | 10.0 | 5.0 | - |
| sum of contents of formic acid and acetic acid (ppm) | 115 | 121 | 120 | 122 | 132 | 133 |
| acidity (score) | 1.4 | 1.6 | 2 | 2.2 | 2.8 | 2.8 |

As may be apparent from Table 5, with the flowing amount of 0.1 kg for the 2.0 kg of roasted coffee beans, the contents of the formic acid and acetic acid and the score of acidity were substantially same as those of the control beans. However, with the flowing amounts of 0.2 kg or more, the contents of the formic acid and acetic acid and the score of acidity were lower than those of the control beans. Based on this, it is believed that the total amount of steam used for the steam flowing treatment employed in the invention's technique should preferably be 10% or more of the weight of the roasted coffee beans charged into the apparatus.

**Example 6**

Next, the grain size of roasted coffee beans employed in the steam flowing treatment was studied. The invention's technique is applicable not only to whole beans, but also to roughly ground roasted coffee beans. However, it is believed that if the beans are ground too finely on the contrary, the roast aroma will be transferred to the steam flowing through, hence, the total amount of the aroma obtained from the treated beans will be smaller. Then, by using 10 mesh sifter (sieve opening: 1.7 mm) of JIS standard (for fine sifting), roasted coffee beans (L=20, species: COFFEA ARABICA) in 5 levels of mesh passing fraction ratios: 10%, 30%, 50%, 70% and 90%, were prepared and 2.0 kg of each portion was put into a pressure vessel having pressure resistance of 3.0 MPa and including a steam inlet pipe and an outlet pipe. Then, a steam flowing treatment was effected by flowing high-pressure steam (saturated steam) of 1.0 MPa (180°C) from the steam inlet pipe at a rate of 100kg/h per 1kg of roasted coffee beans. Then, by effecting the steam treatment at the pressure of 1.0 MPa (180°C) for four minutes, the invention's treated beans, as roasted coffee beans, were obtained.
The obtained treated beans were dried and ground, and to 50 g of the ground beans, 500 ml of 95°C hot water was added to effect extraction for five minutes. Then, on the extracts obtained, determinations of contents of formic acid and acetic acid and evaluation of roast aroma characteristic with the species: COFFEA ARABICA were conducted. Incidentally, the evaluation of roast aroma was conducted by the scoring method and evaluated in three levels of:

roast aroma "felt" = 3 points,
"slightly felt" = 2 points
"not felt" = 1 point

and, an average point of five special panelists was calculated.
The results are shown in Table 6.

[Table 6]

| ratio of fraction passing 10 mesh | 10% | 30% | 50% | 70% | 90% |
|---|---|---|---|---|---|
| sum of contents of formic acid and acetic acid (ppm) | 123 | 120 | 124 | 125 | 123 |
| roast aroma (score) | 2.8 | 2.6 | 2.2 | 2.0 | 1.4 |

As may be apparent from Table 6, the acidity component eliminating effect was observed, regardless of the ratio of the fraction passing the mesh. However, when the mesh-passing fraction became 90%, there was observed reduction in the roast aroma. Based on this, it was found that the ratio of the fraction passing the 10 mesh should preferably be 70% or less.

**Example 7**

Next, the roasted coffee beans (whole beans) were changed to the robusta species: COFFEA CANEPHORA.

And, at a high temperature and a high pressure, steam was caused to flow continuously therethrough.

More particularly, except for the use of the COFFEA CANEPHORA species (L=18) as the roasted coffee beans, the continuous steam treatment was effected like Example 4, thereby obtaining the invention's treated beans. Further, the roasted coffee bens prior to the steam passing treatment were used as un-treated beans. Then, the invention's treated beans and the un-treated beans were dried and ground like Example 4 and resultant extracts were evaluated. Further, on the invention's treated product and the un-treated product, robusta odor evaluation by special panelists was conducted. The evaluation was made by way of evaluations of the extraction ratios and robusta odor. Incidentally, the evaluation was conducted by the scoring method and evaluated in three levels of:

robusta odor "felt" = 3 points,
"slightly felt" = 2 points
"not felt" = 1 point

and, an average point of the five special panelists was calculated.

The results are shown in Table 7. As may be apparent from Table 7, as compared with the un-treated beans, the extraction ratio improved by about 1.6 times with the invention's treated beans. Based on the scores of the robusta odor evaluations, it is understood that the invention's treated product has less robusta odor than the un-treated product.

[Table 7]

|  | invention's treated beans | un-treated beans |
|---|---|---|
| extraction ratio (%) | 40.7 | 24.8 |
| extraction ratio proportion | 1.64 | 1.00 |
| robusta odor | 1.4 | 2.6 |

On the other hand, smell evaluation of steam drain collected when the invention's treated beans were obtained was conducted. As the result, unpleasant robusta odor was felt from the drain.

Therefore, it was found that when the species: COFFEA CANEPHORA species was used as the roasted coffee beans in the invention's treatment, the unpleasant odor characteristic with the species: COFFEA CANEPHORA species is collected and eliminated in the condensed liquid of the exhausted steam, hence, the quality of the species: COFFEA CANEPHORA species can be improved.

Further, for the invention's steam treated roasted coffee beans (the invention's treated beans (after drying)) and the un-treated beans using the species: COFFEA CANEPHORA species beans, basic components (water, protein, lipid, ash, glucide, dietary fiber, etc.) were evaluated.

Water content was analyzed by using the atmospheric heating drying method.

Protein content was analyzed by using the Kjeldahl method.

Lipid content was analyzed by using the Soxhlet extracting method (petroleum ether).

Ash content was analyzed by using the direct ashing method.

Dietary fiber content was analyzed by using the emzyme - weight method.

Glucide content was analyzed by using the formula according to the nutrition presentation standard, namely, [100 - (water + protein + lipid +ash + dietary fiber+ caffeine + tannin)]

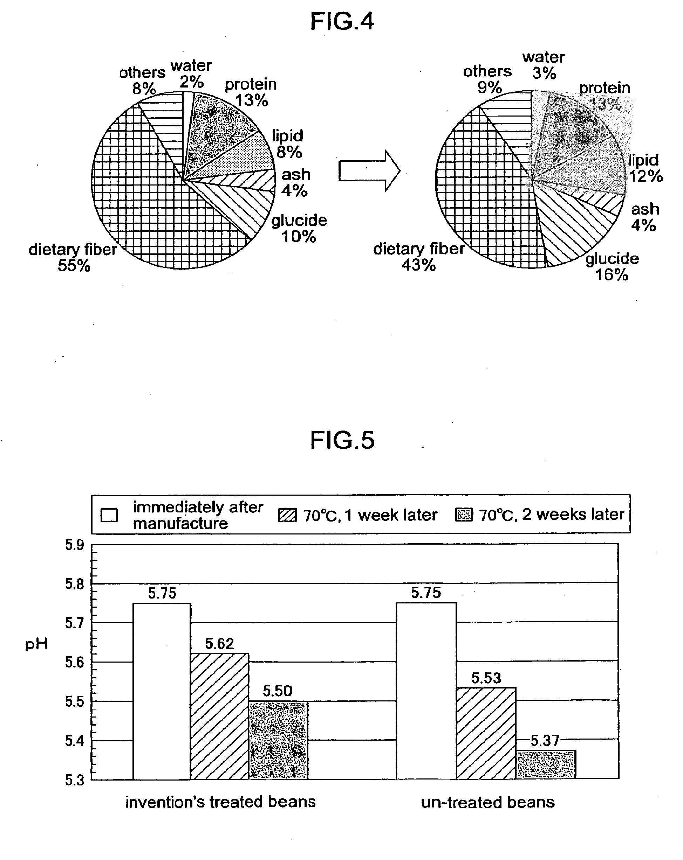

The results are shown in Fig. 4. The water contents of the two kinds of beans were 2% and 3%, respectively. As significant changes in the basic components other than water, in the invention's treated beans, as compared with the un-treated beans, the dietary fiber content decreased by about 10 and a few %, the glucide content increased by 6% and the lipid content increased by 4%, respectively.

Therefore, it was held that the main reasons for the improved extraction ratio, in terms of the basic components, are decomposition of the dietary fiber, increases of the glucide and lipid contents due to e.g. the hydrothermal reaction under the high temperature and high pressure.

## Example 8

Next, milk-containing coffee beverage was made with using the roasted coffee beans of the present invention.

More particularly, with using the roasted beans of the robusta species: COFFEA CANEPHORA (L=24), a steam flowing treatment at the pressure of 3.0 MPa (230°C) for 0.5 minute was effected and the other conditions were set same as those of Example 4, whereby 2 kg of the invention's roasted coffee beans was obtained. Then, 100g of the roasted coffee beans obtained was ground and a dripping extraction thereof was effected for 15 minutes with 1000 ml of pure water at 80°C. Then, by effecting solid-liquid separation thereon, an extract was obtained. Next, to this extract, 200 ml of milk, 100g of sugar and an appropriate amount of sodium bicarbonate (adjusted to obtain pH value of 5.75 after a retort sterilization) were added and this mixture was adjusted with pure water to obtain a final amount of 2 L. After the liquid preparation was homogenized, this was charged and sealed in a 190 mL can and then subjected to a retort sterilization (at 125°C for 20 minutes), whereby the invention's treated beverage (pH = 5.75 after the retort sterilization) as a milk-containing coffee beverage was obtained.

Further, as a control, with using roasted beans of the robusta species: COFFEA CANEPHORA without the invention's treatment, preparation was carried out in the same manner as above, whereby an un-treated beverage (pH = 5.75 after the retort sterilization) as a milk-containing coffee beverage was obtained.

As the result, as the extract of the invention's treated beans, about 800 ml of extract having Brix: 4.0 was obtained, and the extraction ratio was 32.2%. On the other hand, as the extract of the un-treated beans, about 800 ml of extract having Brix: 2.5 was obtained, and the extraction ratio was 20.2%.

Next, on the invention's treated beverage and the un-treated beverage, flavor evaluation by special panelists was conducted. The flavor evaluation was conducted by the scoring method by 5 special panelists and an average score was calculated.

The evaluation was given in five levels of

"good" = 5 points,
"fairly good" = 4 points,
"average" = 3 points,
"slightly poor" = 2 points, and
"poor" = 1 point.

Further, the robusta odor evaluation was made in the three levels of:

roubusta odor "felt" = 3 points,
"slightly felt" = 2 points, and
"not felt" = 1 point.

The results are shown in Table 8. In the score of the flavor evaluation, the invention's treated beverage obtained a better score than the un-treated beverage. Further, there was obtained a comment that the invention's treated beverage had good body and depth. It was believed that this comment reflects the increase of the extraction ratio. Further, as to the score of the robusta odor evaluation, the invention's treated beverage, when compared with the un-treated beverage, obtained a score of less robusta odor.

[Table 8]

|  | invention's treated beverage | un-treated beverage |
|---|---|---|
| extraction ratio (%) | 32.2 | 20.2 |
| flavor evaluation score | 4.4 | 3.2 |
| robusta odor evaluation score | 1.2 | 2.8 |

Therefore, there was obtained a coffee beverage having increased extraction ratio of soluble solid coffee component and additional superior flavor characteristic with coffee as well as reduced robusta odor.

**Example 9**

Next, on the invention's treated beverage and the un-treated beverage obtained in Example 8, assuming storage thereof in a hot vending machine (automated vending machine capable of heating), experiments were conducted on preservation stability. More particularly, two cans respectively of the invention's treated beverage and the un-treated beverage (both adjusted to pH = 5.75) were put into a thermostatic oven kept at 70°C and samplings were made after 1 week and 2 weeks, respectively for determination of pH values to evaluate an amount of reduction of pH.

The results are shown in Fig. 5. In the case of the un-treated beverage, the reductions of pH at 1 week and 2 weeks immediately after the manufacture thereof were 0.22 and 0.38, respectively. Whereas, in the case of the invention's treated beverage, the reductions of pH after 1 week and 2 weeks were 0.13 and 0.25, respectively, showing that the reduction amounts of pH were lower with the invention's treated beverage than the un-treated beverage.

Therefore, it was found that when the roasted coffee bean treated product of the invention is employed, the degree of pH reduction due to generation of acid during storage thereof under a high-temperature condition in a hot vending machine can be restricted.

**Example 10**

A black coffee beverage was manufactured with using the invention's roasted coffee beans.

More particularly, a treatment at the pressure of 0.7 MPa (165°C) was effected for 20 minutes, with using the roasted beans of the species: COFFEA ARABICA (L=30), at a rate of 50 kg/h per 1kg of the roasted coffee beans and the other manufacturing conditions were set same as Example 3, whereby 2 kg of roasted coffee beans treated product of the invention was obtained. Then, 40g of the roasted coffee beans obtained was ground and a dripping extraction thereof was effected for 20 minutes with 400 ml of pure water at 60°C. Then, by effecting solid-liquid separation thereon, an extract was obtained. Next, to this extract, 1.5 g of sodium bicarbonate was added and this mixture was adjusted with pure water to obtain a final amount of 1 L. This liquid preparation was charged and sealed in a 190 mL can and then subjected to a retort sterilization (at 125°C for 5 minutes), whereby the invention's treated beverage as a black coffee beverage was obtained.

As the result, the extraction ratio of the extract of the invention's treated beverage was as high as 30.4%, meaning a high extraction efficiency of the soluble solid coffee component. Further, the sensory evaluation showed less acidity and additional superior body characteristic with coffee.

Industrial Applicability

As described above, with the invention's treatment method of roasted coffee beans, it is possible to obtain steam-treated roasted coffee beans capable of providing a coffee beverage having less acidity and having also superior and additional flavor and body inherent in coffee.

**Brief Description of the Drawings**

[Fig. 1] a graph showing organic acid analysis of roasted coffee beans before and after a continuous steam flowing treatment,

[Fig. 2] a graph showing organic acid analysis of steam condensed liquid after the continuous steam treatment of the roasted coffee beans,

[Fig. 3] a graph showing organic acid analysis of steam condensed liquid after the continuous steam treatment of the roasted coffee beans conduced at a high-temperature condition,

[Fig. 4] a graph showing changes in basic components of the whole roasted coffee beans before and after a high-pressure steam flowing treatment,

[Fig. 5] a graph showing evaluation of pH reduction degrees of a coffee beverage, assuming storage thereof in a hot vending machine.

**Claims**

1.  A method of treating roasted coffee beans, wherein a steam treatment is effected on the roasted coffee beans by supplying steam thereto under a flowing condition thereof,
    wherein the roasted coffee beans are accommodated in a bean accommodating portion having a steam supply passage and a steam exhaust passage and the steam treatment is effected by flowing the steam having a temperature of from 100 to 230 °C from the steam supply passage to the steam exhaust passage such that the steam is exhausted from the steam exhaust passage at an outlet pressure higher than the atmospheric pressure.

2.  The method of treating roasted coffee beans according to claim 1, wherein the roasted coffee beans comprise whole roasted beans and ground roasted beans which can pass a mesh of an aperture of 1.7 mm and the amount of the ground roasted beans is 70 weight % or less.

3.  The method of treating roasted coffee beans according to claim 1, wherein that the roasted coffee beans comprise whole roasted beans.

4. The method of treating roasted coffee beans according to claim 1 or 2 wherein the amount of steam used in the steam treatment is 10 weight % or more of the weight of the roasted coffee beans.

5. The method of treating roasted coffee beans according to claim 1, wherein that the steam comprises saturated steam.

6. The method of treating roasted coffee beans according to claim 5, wherein that the saturated steam has a temperature of from 165 to 230 °C.

**Patentansprüche**

1. Verfahren zur Behandlung von gerösteten Kaffeebohnen, bei dem die gerösteten Kaffeebohnen einer Dampfbehandlung unterzogen werden, indem diesen Dampf unter einer Durchflussbedingung desselben zuführt wird,
   wobei die gerösteten Kaffeebohnen in einem Aufnahmeraum für Bohnen aufgenommen sind, der einen Dampfzuführkanal und einen Dampfauslasskanal aufweist,
   und wobei die Dampfbehandlung ausgeführt wird, indem der Dampf mit einer Temperatur von 100 bis 230 °C vom Dampfzuführkanal zum Dampfauslasskanal strömt, derart, dass der Dampf am Dampfauslasskanal mit einem Auslassdruck ausströmt, der höher ist als der Atmosphärendruck.

2. Verfahren zur Behandlung von gerösteten Kaffeebohnen nach Anspruch 1,
   wobei die gerösteten Kaffeebohnen ganze geröstete Bohnen und gemahlene, geröstete Bohnen umfassen, die durch ein Sieb mit einer Maschenweite von 1,7 mm hindurchpassen, und die Menge an gemahlenen, gerösteten Bohnen 70 Gewichts% oder weniger beträgt.

3. Verfahren zur Behandlung von gerösteten Kaffeebohnen nach Anspruch 1,
   wobei die gerösteten Kaffeebohnen ganze geröstete Bohnen umfassen.

4. Verfahren zur Behandlung von gerösteten Kaffeebohnen nach Anspruch 1 oder 2, wobei die Menge des Dampfes, der bei der Dampfbehandlung verwendet wird, 10 Gewichts% oder mehr des Gewichts der gerösteten Kaffeebohnen beträgt.

5. Verfahren zur Behandlung von gerösteten Kaffeebohnen nach Anspruch 1,
   wobei der Dampf gesättigten Dampf umfasst.

6. Verfahren zur Behandlung von gerösteten Kaffeebohnen nach Anspruch 5,
   wobei der gesättigte Dampf eine Temperatur von 165 bis 230°C aufweist.

**Revendications**

1. Procédé de traitement de fèves de café torréfiées, dans lequel un traitement à la vapeur est effectué sur les fèves de café torréfiées en leur appliquant de la vapeur sous une certaine condition d'écoulement de celle-ci,
   dans lequel les fèves de café torréfiées sont reçues dans une partie de réception de fèves ayant un passage d'application de vapeur et un passage d'évacuation de vapeur et le traitement à la vapeur est effectué en faisant circuler la vapeur de température comprise entre 100 °C et 230 °C depuis le passage d'application de vapeur vers le passage d'évacuation de vapeur de telle sorte que la vapeur est évacuée du passage d'évacuation de vapeur à une pression de sortie supérieure à la pression atmosphérique.

2. Procédé de traitement de fèves de café torréfiées selon la revendication 1, dans lequel les fèves de café torréfiées comprennent des fèves torréfiées entières et des fèves torréfiées moulues qui peuvent traverser un tamis de 1,7 mm d'ouverture de maille et la proportion des fèves torréfiées moulues est de 70 % en poids ou moins.

3. Procédé de traitement de fèves de café torréfiées selon la revendication 1, dans lequel les fèves de café torréfiées comprennent des fèves torréfiées entières.

4. Procédé de traitement de fèves de café torréfiées selon la revendication 1 ou 2, dans lequel la proportion de vapeur utilisée dans le traitement à la vapeur est de 10 % en poids ou plus de la masse des fèves de café torréfiées.

**5.** Procédé de traitement de fèves de café torréfiées selon la revendication 1, dans lequel la vapeur comprend la vapeur saturée.

**6.** Procédé de traitement de fèves de café torréfiées selon la revendication 5, dans lequel la vapeur saturée est à une température comprise entre 165 et 230 °C.

# FIG.1

# FIG.2

# FIG.3

# FIG.4

# FIG.5

| ☐ immediately after manufacture | ▨ 70°C, 1 week later | ▦ 70°C, 2 weeks later |

invention's treated beans          un-treated beans

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9520325 A
- US 5019413 A
- US 3106470 A
- JP 2001149013 A
- JP 63003905 A

- US 3620758 A
- JP 2004049086 A
- JP 58086043 A
- JP 2000342182 A

**Non-patent literature cited in the description**

- Dictionary of Food Treating Systems and Instruments. Industrial Research Institute, 2002, 100